# EUROPEAN PATENT APPLICATION

(11) **EP 4 761 080 A1**
(43) Date of publication of application: **17.06.2026**
(21) Application number: 24220195.2
(22) Date of filing: 16.12.2024
(51) Int. Cl.: H02M 1/00, H02M 1/42, H02M 3/00, H02M 3/28, H02M 3/335, H02M 7/25

(54) **MULTI-PHASE AC/DC CONVERTER AND CONTROL METHODS FOR OPERATING MULTI-PHASE CONVERTERS**

(71) Applicant: Delta Electronics (Thailand) Public Co., Ltd., Samutprakarn 10280 (TH)
(72) Inventor: SOLANKI, Jitendra, 59494 Soest (DE)
(74) Representative: Hoefer & Partner Patentanwälte mbB

(57) **Abstract**

The invention concerns a multi-phase AC/DC converter (1) comprising: a transformer device (2) with a primary side (3) and a secondary side (4); a bidirectional primary side circuit (5) connected to the primary side (3) of the transformer device (2); a bidirectional secondary side circuit (6) connected to the secondary side (4) of the transformer device (2); and a DC/DC converter circuit (20) comprising at least one input stage (5a), the transformer device (2), and an output stage (6a); wherein the bidirectional primary side circuit (5) comprises an AC/DC converter circuit (5a) and the at least one input stage (5b) of the DC/DC converter circuit (20); the bidirectional secondary side circuit (6) comprises the output stage (6a) of the DC/DC converter circuit (20); and the primary side circuit (5) is multi-rail with a number of rails (7, 7a, 7b, 7c) corresponding to a number of phases of the multi-phase AC/DC converter (1), and each rail (7, 7a, 7b, 7c) being connected between a phase (8a, 8b, 8c) and neutral (9) or between a first phase (8a) and another phase (8b, 8c) of a multi-phase AC input source (8). The invention also concerns control methods for operating multi-phase converters.

## Description

### Field of the Invention

The invention concerns a multi-phase AC/DC converter, a control method for operating the multi-phase AC/DC converter, and a control method for operating a multi-phase converter.

### Background of the Invention

From US 2021/0408922 A1, a DC-DC resonant converter and a control method thereof are known, in which a stacked-bridge resonant converter and switching frequency control and voltage balancing strategies is shown.

From WO2015/076776 A1, a PFC (power factor correction) for multi-phase power delivery is known which comprises multiple active PFC modules and multiple isolated DC-DC converters.

From WO 2023/245292 A1, power factor correction with power balancing control for three-phase single-stage AC-DC converters is known.

Furthermore, from US 2022/0393607 A1, a three phase bidirectional AC-DC converter with bipolar voltage fed resonant stages is known.

Power electronics converters are widely used in the industry for AC to DC power conversion, as in the above. These are commonly used for charging batteries from an AC grid or providing power to other DC loads. In commonly employed cases, such a conversion takes place in two steps, first an AC/DC converter is used which is followed by a DC/DC converter.

However, the known solutions have the drawback of being large in size, require a large amount of components, are costly and electrically as well as thermally inefficient. Furthermore, they have low flexibility with regard to their connection to an AC grid as well their operation at partial power. The control method for operating these known solutions is also commonly complicated.

### Summary

It is an object of the present invention to overcome these deficiencies. In particular, it is an object of the present invention to provide a multi-phase AC/DC converter which has a reduced size, higher electrical and thermal efficiency and can be produced for low costs. Furthermore, it is an object of the present invention to provide control methods for multi-phase converters and control methods for said multi-phase AC/DC converter which allow for simple and flexible as well as efficient control of the multi-phase converters, and which allow for reduction in the size of transformers and output filter capacitor sizes thereof.

The solution of these objects is achieved by the subject matter of the independent claims. The dependent claims contain advantageous embodiments of the present invention.

In particular, the solution of these objects is achieved by the multi-phase AC/DC converter according to claim 1. The converter comprises a transformer device with a primary side and a secondary side. Further, the converter comprises a bidirectional primary side circuit connected to the primary side of the transformer device. The converter also comprises a bidirectional secondary side circuit connected to the secondary side of the transformer device. Furthermore, the converter comprises a DC/DC converter circuit comprising at least one input stage, the transformer device, and an output stage. The bidirectional primary side circuit comprises an AC/DC converter circuit and the at least one input stage of the DC/DC converter circuit. The bidirectional secondary side circuit comprises the output stage of the DC/DC converter circuit. In other words, the input stage(s), the transformer device, and the output stage form the DC/DC converter circuit, wherein the input stage(s) is/are included in the primary side circuit and the output stage is included in the secondary side circuit. Therein, the primary side circuit is multi-rail, wherein a number of rails corresponds to a number of phases of the multi-phase AC/DC converter. Each rail is connected between a phase and neutral or between a first phase and another phase of a multi-phase AC input source.

Some advantages of this topology are the following. The multi-rail topology of the primary side circuit provides high flexibility of connection to AC grid, as each rail can be independently or separately connected to the grid. Due to separate rails, in case of failure of one of the rails, the converter can still operate at partial power using the other rails. Furthermore, single-phase AC/DC converters can be employed in each of the rails, which have significantly simplified control operations as compared to for example three-phase AC/DC converters used in a single-rail converter.

It should be noted that the present multi-phase AC/DC converter is bidirectional. Therefore, it is to be understood that principally the terms "primary" and "secondary" are interchangeable. Furthermore, the terms "input" and "output" are likewise interchangeable. However, for the sake of ease of explanation, the following will refer to the primary side as the side connected to grid ("input") and the secondary side as the side outputting the (converted) DC power, for example to one or more batteries or to a DC load ("output").

In preferable embodiments, the DC/DC converter circuit output stage of the secondary side circuit is a multi-level DC/DC converter output stage. Such a topology may also be referred to as a stacked converter topology. This has the advantage of lowering the number of parts, especially a number of capacitors and sensing circuits on the secondary side as well as allowing for a simple control scheme. Furthermore, employing a multi-level output stage has the advantage in that lower voltage switches, for example comprising GaN, can be used, even for high-voltage applications. For example, GaN switches are preferably used, which have commonly a blocking voltage of 650V. For applications requiring 800V or more, for example in automotive applications, the use of multi-level topology in the DC/DC converter circuit output stage allows the use of such switches. This furthermore allows for higher operating frequencies of the switches, which further allows for reduction in size of the converter.

In the sense herein, the term "multi-level" refers to a number of voltage levels being more than two, i.e. a two-level converter is not understood as being "multi-level". Preferably, in some examples, the multi-phase AC/DC converter is three-phase and comprises three rails in the primary side circuit and three levels in the output stage of the secondary side circuit.

In some embodiments, the DC/DC converter circuit output stage of the secondary side is a multi-level and a multi-rail DC/DC converter output stage. In other words, preferably, the DC/DC converter circuit output stage of the secondary side comprises multiple rails, preferably each comprising multiple levels. In this regard, the term "multi-rail", especially with regard to the DC/DC converter circuit output stage of the secondary side, refers to multiple (in some cases three) independent voltages and multiple (i.e. three) independent currents, even in cases where the multiple rails are interconnected, for example in parallel to a common battery voltage, since the multiple rails are independently controllable. Further preferably, multiple levels are formed by interconnection of half-bridges, wherein preferably each level is formed via two interconnected half-bridges.

Further preferably, the input stage(s) and/or the output stage of the DC/DC converter circuit comprise an LLC or an SRC or a DAB configuration. By using especially an SRC topology, shorting of secondary side switches can be employed for boosting voltage. Furthermore, the SRC topology allows for lower frequency variations and for use in applications with low load voltage variation. DAB topology has advantage of less number of components and fixed frequency operation.

Advantageously, the secondary side circuit, especially the DC/DC converter circuit output stage, comprises a plurality of stacked half-bridges connected in series with one another.

Preferably, in the output stage of the DC/DC converter circuit, the secondary side of the transformer device is connected, especially in series, between a first connection point to a first secondary half-bridge and a second connection point to a second secondary half-bridge different from the first secondary half-bridge. In other words, preferably, the first connection point is a point of the first secondary half-bridge and the second connection point is a point on the second secondary half-bridge, with the secondary side of the transformer device being connected, especially in series, between the first and second connection points.

Preferably, each phase of the secondary side of the transformer device is connected between said first and second connection points to the first secondary half-bridge and to the second secondary half-bridge of a single secondary rectifier leg of the DC/DC converter circuit output stage. Therein, each phase is thus connected to (and between) one rectifier leg, the rectifier leg being a series connection of a rectifier (sub-) leg of the first half-bridge with a rectifier (sub-) leg of the second half-bridge.

Further preferably, in the exemplary case of the output stage of the DC/DC converter circuit of the secondary side being multi-rail, each rail comprises two stacked half-bridges connected in series with one another.

In advantageous embodiments, each rail of the primary side circuit comprises one AC/DC converter circuit. Preferably, each AC/DC converter circuit of respectively each rail of the primary side circuit is a single-phase AC/DC converter circuit. Thereby, control and manufacturing of the multi-phase AC/DC converter is simplified.

Preferably, each AC/DC converter circuit is a front-end power factor correction AC/DC converter circuit (PFC-AC/DC converter circuit). Thereby, each AC/DC converter circuit simultaneously and advantageously provides power factor correction as well as AC/DC conversion for the DC/DC converter circuit input stage.

Further preferably, each PFC-AC/DC converter circuit of the primary side circuit comprises two switch legs in parallel. Therein, each switch leg comprises two switches in series, wherein one switch leg is connected to the phase and the other switch leg is connected to neutral or to another phase.

Advantageously, each PFC-AC/DC converter circuit of the primary side circuit comprises two switch legs in parallel, each switch leg comprising two switches in series, wherein both switch legs are connected to the phase in an interleaved manner. Therein, both switch legs of each PFC-AC/DC converter circuit are connected to the same phase in an interleaved manner.

Preferably, with the switch legs connected in an interleaved manner, the PFC-AC/DC converter circuit further comprises an additional rectifier switch leg connected to ground or neutral.

The interleaved connection of the PFC-AC/DC converter circuit has the advantage in that chokes of the multi-phase AC/DC converter can be reduced in size. Furthermore, utilizing the interleaved connection along with an additional rectifier switch leg allows for a combination of fast and slow switches. For example, the switch legs of the PFC-AC/DC converter circuit can comprise fast switches, for example MOSFETs, and the additional rectifier switch leg can comprise slower switches, for example IGBTs. Furthermore, the interleaved connection above provides overall reduced size of the converter and advantageously reduces ripple current.

Advantageously, each rail of the primary side circuit comprises one input stage for the DC/DC converter circuit. In other words, preferably, the number of rails and the number of input stages for the DC/DC converter circuit is equal.

Preferably, each input stage for the DC/DC converter circuit is connected in parallel to the AC/DC converter circuit for each rail. Preferably, each input stage for the DC/DC converter circuit is connected only directly the AC/DC converter circuit of the respective rail, i.e. is not connected directly to the AC/DC converter circuit of another rail or the input stage for the DC/DC converter of another rail.

Preferably, with the multi-phase AC/DC converter being three-phase, each input stage for the DC/DC converter circuit of the primary side circuit preferably comprises two switch legs in parallel, wherein each switch leg comprises two switches in series. Therein, the primary side of the transformer device is connected between the two switch legs of the input stage, with respect to each rail.

In a preferable alternative embodiment, each input stage for the DC/DC converter circuit of the primary side circuit comprises a half-bridge converter in an LLC configuration. For example, such input stage comprises, per rail, one switch leg comprising two switches and one capacitor leg with two capacitors, wherein the primary side of the transformer is connected, per rail, between the switch leg and the capacitor leg of each input stage. The LLC primary side configuration has the advantage in that a lower amount of switches is used, which reduces cost and complexity, as well as being employable for low-power applications, since the input stage can be operated at the same voltage with half the current, for example as compared to series resonant converter topology as the input stage.

Preferably, the transformer device comprises multiple transformers. Preferably, each of the multiple transformers may be connected to exactly one primary side circuit rail. In other advantageous embodiments, the multiple transformers are interconnected at the primary side circuit.

In some embodiments, the transformer device may comprise multiple integrated transformers, for example each comprising one or more magnetic components which are, with respect to each of the transformers, separated from one another via insulation and each connected to one rail of the primary side circuit, i.e. each to one input stage of the DC/DC converter circuit of the primary side circuit.

In other alternative embodiments, the transformer device may comprise one transformer. Therein, preferably, the aforementioned multiple input stages, i.e. with respect to the multiple rails, are connected to one another so as to combine into one common input stage for the transformer. In other words, the multi-phase AC/DC converter preferably comprises exactly one input stage connected to the transformer.

The present invention also concerns a control method for operating a multi-phase converter according to claim 15. Therein, the converter comprises a primary side circuit, a transformer device, a secondary side circuit and a DC/DC converter circuit comprising an input stage, the transformer device, and an output stage, wherein the primary side circuit further comprises an AC/DC converter circuit and the input stage of the DC/DC converter circuit. The secondary side circuit comprises the output stage of the DC/DC converter circuit. The control method comprises the following steps: Determining an operating frequency fdc/dc of switches of the input stage based on a required output current and voltage of the converter. Calculating output power from sensed output voltage and/or required or sensed output current. Determining a time delay between switching signals of switches of the output stage with respect to the switching signals of the switches of the input stage based on said operating frequency and said output power. Determining the duration of the switching signal of the switches of the output stage based on said operating frequency and said output power.

Advantageously, by determining the time delay between the switching signals of the input stage with respect to those of the output stage and by determining the duration of the switching signals of the input stage, a synchronous rectification pulse for switches of the output stage is generated.

Preferably, a total time delay is defined as follows. There is a first time point defined for starting switching of the switches of the input stage, i.e. a time point of ON thereof. Further, there is a second time point defined for starting switching of the switches of the output stage, i.e. a time point of ON thereof. The total time delay is the amount of time between the first time point and the second time point, wherein the second time point is after the first time point (defined as a positive time delay).

Further preferably, the total time delay comprises said aforementioned determined time delay as well as a predetermined or pre-known dead-time of the respective switches. This dead-time value is preferably added to the determined time delay and prevents short-circuiting.

Preferably, the time delay and duration of the switching signals of the output stage are determined based on the output power as a threshold value. In particular, below the output power threshold value, synchronous rectification is not carried out. Therein, for example, rectification is carried out using (only) internal integrated diodes of the switches. Preferably, above the output power threshold value, the synchronous rectification as above is carried out, i.e. the time delay and the duration of the switching signals of the output stage are determined as elucidated above. Preferably, beyond the use as a threshold value, the output power is not used as a basis for determining the time delay and/or the duration of the switching signals.

Preferably, a relationship between secondary side current, i.e. at the secondary side of the transformer and before the output stage, and the operating frequency is predetermined or pre-known, for example stored in a look-up table or as a function. Thereby, a time delay and duration of switching signals, for a respective required output current, is dependent on the operating frequency. Therein, the secondary side current is at an operating frequency below resonant frequency with a shorter time delay than above resonant frequency, i.e. at an operating frequency above resonant frequency the secondary side current requires a larger time delay. Overall, below resonant frequency, a timely overlap between switching ON of the input stage and the output stage (i.e. between one high-side primary switch and one high-side secondary switch) is lower than at or above resonant frequency. This correlation is preferably stored in the look-up table or as a function. Thereby, with calculating output power from required output current, the time delay and the duration of switching of output stage can be determined via the look-up table or the function.

Preferably, the step of determining the duration of the switching signal of the switches of the output stage is based only on said operating frequency and said output power. Further preferably, the output power is calculated from the sensed output voltage and/or required output current. Therefore, the synchronous rectification pulse is determined without employing switch voltage or current-sensing. In other words, the present control method is preferably carried out without current-sensing, especially without current-sensing at the output stage, by generating the switching signals for the output stage based only on the switching signals of the input stage on the primary side of the converter. Therein, the duty cycle of the output stage switching signals is varied based on frequency of operation and output power level of the input stage on the primary side.

Preferably, the aforementioned control method is for operating the multi-phase AC/DC converter as elucidated above. In particular, the control method is carried out on a control unit of the multi-phase AC/DC converter. Preferably, more specifically, the aforementioned control method is for operating the DC/DC converter circuit of the multi-phase AC/DC converter.

In some advantageous embodiments of the control method, with the output stage for the DC/DC converter circuit being a multi-level output stage for the DC/DC converter circuit, for instance as elucidated above, the control method further comprises phase-shifting switches of a first half-bridge of the multi-level output stage with respect to switches of a second half-bridge of the multi-level output stage for balancing voltages between first and second capacitors connected at the output stage of the multi-level converter.

Thereby, balancing between different levels of the multi-level output stage of the DC/DC converter circuit is achieved.

Therein, preferably, an operating frequency of each level of the multi-level output stage is kept equal. Thereby, the transformer and output filters can be reduced in size. The current balancing is achieved by adapting DC-link voltages. Furthermore, synchronous rectification herein is achieved without sensing AC currents on the secondary side of the transformer, thereby reducing component costs.

The present invention also concerns a control method for operating the multi-phase AC/DC converter according to any one of the foregoing descriptions. Herein, the multi-phase AC/DC converter comprises the output stage as the multi-level output stage of the foregoing, the multi-level output stage further being multi-rail, and the primary side circuit comprises, in each rail, the PFC-AC/DC converter circuit of the foregoing. Therein, the method comprises the following: For each rail of the multi-level output stage, determining an output current. Calculating an average of said output currents of all rails. Calculating, per rail, a DC-link voltage correction value based on a difference between the output current of that rail and the average output current of all rails, especially via proportional-integral control. Further, adding the DC-link voltage correction value to a DC-link voltage reference value to determine a DC-link voltage required value. Determining a DC-link voltage difference between an actual DC-link voltage value and the DC-link voltage required value. Determining a PWM signal for switches of the PFC-AC/DC converter circuit based at least on the DC-link voltage difference and outputting the PWM signal to the switches.

Thereby, a DC-link voltage on the primary side circuit, generated by the PFC-AC/DC converter, is maintained and balanced with respect to output currents on the secondary side. Furthermore, a sinusoidal current is generated, ia, ib, ic in some embodiments, in the primary side circuit.

For example, in a three-level and three-rail output stage and three-rail primary side circuit, the average of the three output currents of each rail is calculated, as (ioa+iob+ioc)/3, with ioa, iob, and ioc being the output currents of each rail of the output stage flowing to the output of the multi-phase AC/DC converter.

Further for example, the calculated DC-link voltage correction value, V*DCa1 in some embodiments, is a correction value which balances the DC-link voltage on the primary side after the PFC-AC/DC converter, VDCa in some embodiments, so as to change each output current of each rail of the output stage towards the average output current of all rails. This is carried out for all rails, referred to in some embodiments as V*DCb1, V*DCc1 for the correction value and VDCb, VDCc for the DC-link voltage.

Further for example, the DC-link voltage correction value, V*DCa1, is added to the DC-link voltage reference value, V*DC in some embodiments, to determine the DC-link voltage required value V*DCa, wherein the DC-link voltage reference value is a calculated or a fixed value depending especially on required output of the AC/DC converter. The DC-link voltage required value V*DCa therefore corresponds to the DC-link voltage reference value, which depends on the required output and which is corrected so as to balance the DC-link voltage on the primary side via the DC-link voltage correction value.

Furthermore, the DC-link voltage difference between an actual DC-link voltage value VDCa, especially per rail, and the DC-link voltage required value, V*DCa, is determined so as to determine a PWM signal for switches of the PFC-AC/DC converter circuit.

Preferably, during the step of determining the PWM signal, the method further comprises the following: Calculating, especially via proportional-integral control, a root mean square (RMS) value of a reference input current from the DC-link voltage difference. Multiplying the RMS value of reference current with a sensed unity input voltage at the PFC-AC/DC converter circuit to calculate an input current reference value. Calculating a difference between the input current reference value and a sensed input current value. Calculating, especially via proportional-integral control, a sinusoidal signal value based on said difference between the input current reference value and the sensed input current value. Calculating a PWM signal based on the sinusoidal signal value.

Therein, for example, the RMS value of the reference input current is a calculated RMS of the output of PI controller processing DC-link voltage difference (RMS value of current), i.e. a calculated RMS of the difference between the actual DC-link voltage value VDCa and the DC-link voltage required value V*DCa.

Further therein, for example, the RMS value of reference input current is multiplied with the sensed unity input voltage of the PFC-AC/DC converter circuit, which is a normalized sensed input voltage with maximum peak value thereby being 1. To calculate the unity input voltage, the voltage is preferably sensed, divided by its RMS value or peak value.

The multiplication of the RMS value of reference input current with the sensed unity input voltage results in the input current reference value, which is an actual reference value of the current and is sinusoidal.

By the foregoing control method, the switching signals for the PFC-AC/DC converter circuit are advantageously determined/calculated so to achieve advantageously balanced currents and voltages over all rails, levels, and phases of the multi-phase AC/DC converter circuit.

Preferably, the control method further comprises the following: Calculating an output current difference value as a difference between a sum of the output currents of all rails, for example ioa+iob+ioc, and a reference, especially a target, total output current of the DC/DC converter circuit. Calculating, especially via proportional-integral control, a switching frequency, for example fdc/dc, for all switches of the input stage based on the output current difference value.

Thereby, the switches of the input stage of the DC/DC converter circuit of the primary side circuit are advantageously controlled to balance the currents between the multiple levels of the secondary side circuit.

Further preferably, the switching frequency, for example fdc/dc, is controlled so as to be substantially equal for all switches of the DC/DC input stage. Thereby, advantageously, the frequency at each rail of the output stage is substantially equal, thereby preferably reducing a beat frequency between the rails of the output stage. This greatly enhances electrical efficiency, reduces noise, and allows for a compacter size of the transformer, as the for example the multiple rails of the secondary side circuit can be placed closer together with less negative feedback or resonance.

Preferably, the foregoing described control methods are carried out by a control unit, particularly by a control unit connected to or part of the foregoing described converters. Preferably, the control unit comprises a CPU, GPU, MPU, FPGA, SoC, or the like. Further preferably, the control unit comprises memory means, configured to store the foregoing described control method as a computer program. For example, the foregoing described look-up table or function is stored in the memory means.

Preferably, where in the above sensing of currents, voltages or the like are referred to, the converter and/or the control unit comprise corresponding sensing means, for example a current and/or a voltage sensor.

The foregoing described preferable embodiments and configurations may be combined. For instance, the aforementioned control methods are combinable or employable in any one of the foregoing described examples of converters.

Further details, advantages, and features of the preferred embodiments of the present invention are described in detail with reference to the figures. Therein:

### Brief Description of the Drawings

Fig. 1 shows a block diagram of a multi-phase AC/DC converter according to a first embodiment of the present invention;
Fig. 2 shows a circuit diagram of the multi-phase AC/DC converter according to the second embodiment of the present invention;
Fig. 3 shows a circuit diagram of a multi-phase AC/DC converter according to a third embodiment of the present invention;
Fig. 4 shows a circuit diagram of a multi-phase AC/DC converter according to a fourth embodiment of the present invention;
Fig. 5 shows a circuit diagram of a multi-phase AC/DC converter according to a fifth embodiment of the present invention;
Fig. 6 shows a flow block diagram illustrating a control method for operating the multi-phase AC/DC converter according to an embodiment of the present invention;
Fig. 7 shows a flow block diagram illustrating a control method for operating the multi-phase AC/DC converter according to an embodiment of the present invention; and
Fig. 8 shows a flow block diagram illustrating a control method for operating the multi-phase AC/DC converter according to an embodiment of the present invention.

### Description of the Embodiments

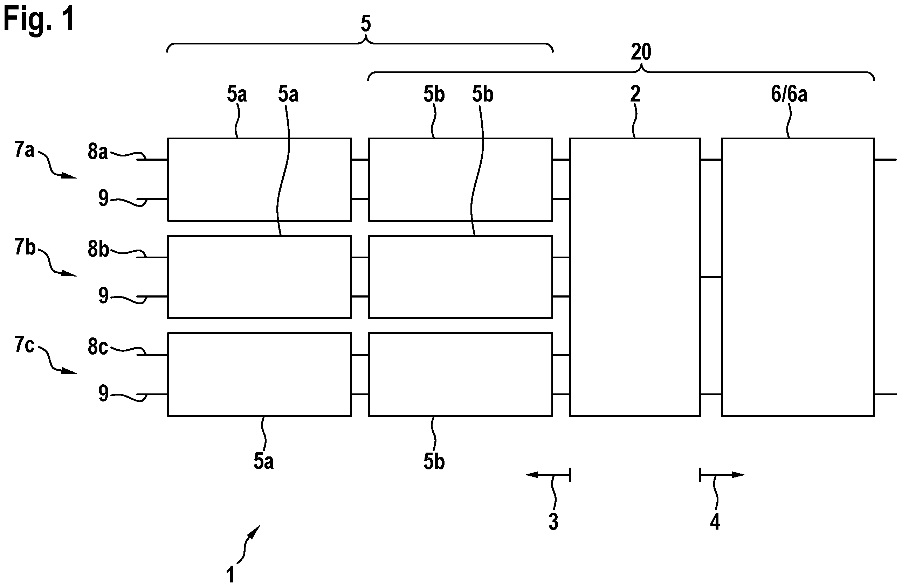

A first embodiment of the present invention will be described with reference to Fig. 1, which shows a block diagram of the multi-phase AC/DC converter 1.

In view of Fig. 1, the multi-phase AC/DC converter 1 of the present embodiment is three-phase for example. However, the multi-phase AC/DC converter 1 is not principally limited to three phases, and can be for instance four- or more, five- or more, and especially six-phase. The following explanations will be based on a three-phase example.

As will be explained below, the converter 1 of the present embodiment is bidirectional. Therefore, principally, the terms "primary" and "secondary" as well as "input" and "output" may be interchangeable. For instance, in a battery charging application, the "primary side" may be connected to AC grid, which would be "input", and the "secondary side" may be connected to the battery, which would be "output", and power is transferred from the grid to the battery during charging. When discharging the battery, for example powering an AC load, the power transfer is reversed, thereby essentially reversing terminology of "primary" and "secondary", "input" and "output". However, for the sake of easier understanding, although interchangeable, the present terminology is chosen in accordance with a case of transferring and converting power from an AC grid.

The converter 1 comprises a transformer device 2 with a primary side 3 and a secondary side 4.

Further, the converter 1 comprises a bidirectional primary side circuit 5, which comprises an AC/DC converter circuit 5a and an input stage 5b of a DC/DC converter circuit 20 connected to the primary side 3 of the transformer device 2.

The converter 1 comprises a bidirectional secondary side circuit 6 connected to the secondary side 4 of the transformer device 2. The bidirectional secondary side circuit 6 comprises an output stage 6a of the DC/DC converter circuit 20.

Thereby, the converter 1 comprises the AC/DC converter circuit 5a and the DC/DC converter circuit 20, wherein the DC/DC converter circuit 20 comprises the input stage 5b, the transformer device 2, and the output stage 6a, the input stage 5b being a part of the primary side circuit 5 and the output stage 6a being a part of the secondary side circuit 6.

Herein, the primary side circuit 5 is multi-rail, meaning that it comprises a plurality of rails 7a, 7b, 7c. A number of rails corresponds to a number of phases of the multi-phase AC/DC converter 1, and is in the present embodiment three. Each rail 7a, 7b, 7c is in the present embodiment connected between a phase 8a, 8b, 8c of the three-phase AC grid input and neutral 9 thereof.

As will also be shown in the further embodiments, each AC/DC converter circuit 5a is preferably two-level and one-phase.

The converter 1 preferably comprises three input stages 5a, one for each rail 7a, 7b, 7c. Each of the input stages 5a is preferably two-level and one-phase.

The converter 1, specifically the secondary side circuit 6, comprises preferably one output stage 6a, which in the present embodiment is three-phase and three-level.

In the present embodiment, the transformer device 2 is a three-phase transformer. In preferable examples, the transformer device 2 consists of three single-phase transformers.

Some advantages of this embodiment are the following. The multi-rail topology of the primary side circuit 5 provides high flexibility of connection to AC grid, as each rail 7a, 7b, 7c can be independently or separately connected to the grid 8a, 8b, 8c, 9. Due to separate rails 7a, 7b, 7c, in case of failure of one of the rails 7a, 7b, 7c, the converter 1 can still operate at partial power using the other rails 7a, 7b, 7c. Furthermore, single-phase AC/DC converters 5a can be employed in each of the rails 7a, 7b, 7c, which have significantly simplified control operations as compared to for example three-phase AC/DC converters used in a single-rail converter.

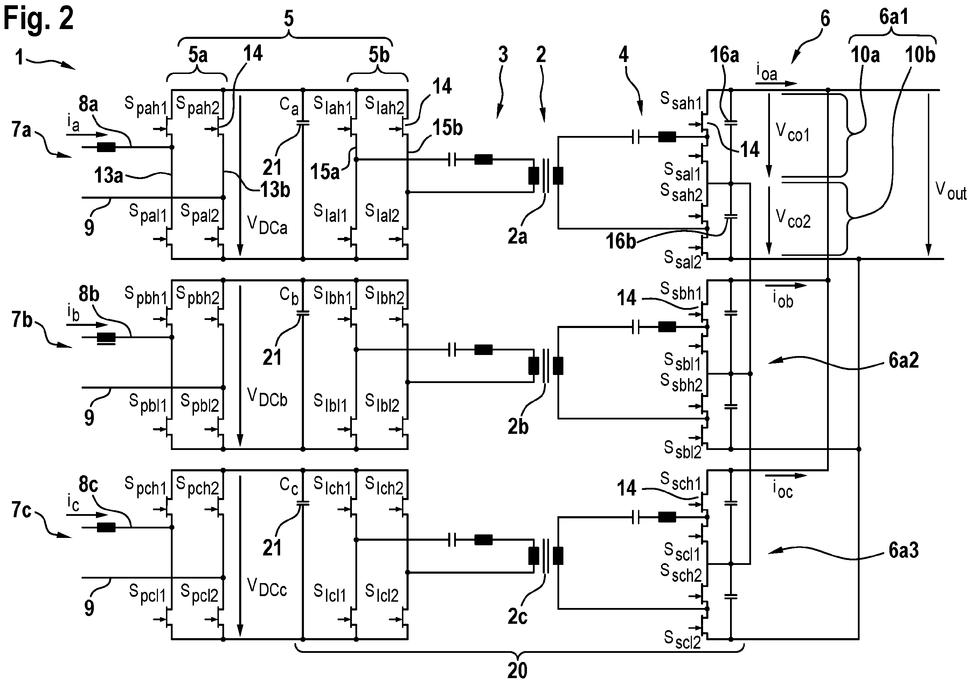

A second embodiment of the present invention will be described with reference to Fig. 2, which shows a circuit diagram of the multi-phase AC/DC converter 1.

Herein, as can be seen in Fig. 2, each AC/DC converter circuit 5a is a front-end power factor correction AC/DC converter circuit 5a, i.e. a PFC-AC/DC converter circuit 5a. Each PFC-AC/DC converter circuit 5a comprises two switch legs 13a and 13b in parallel, wherein each switch leg 13a, 13b comprises two switches 14 in series.

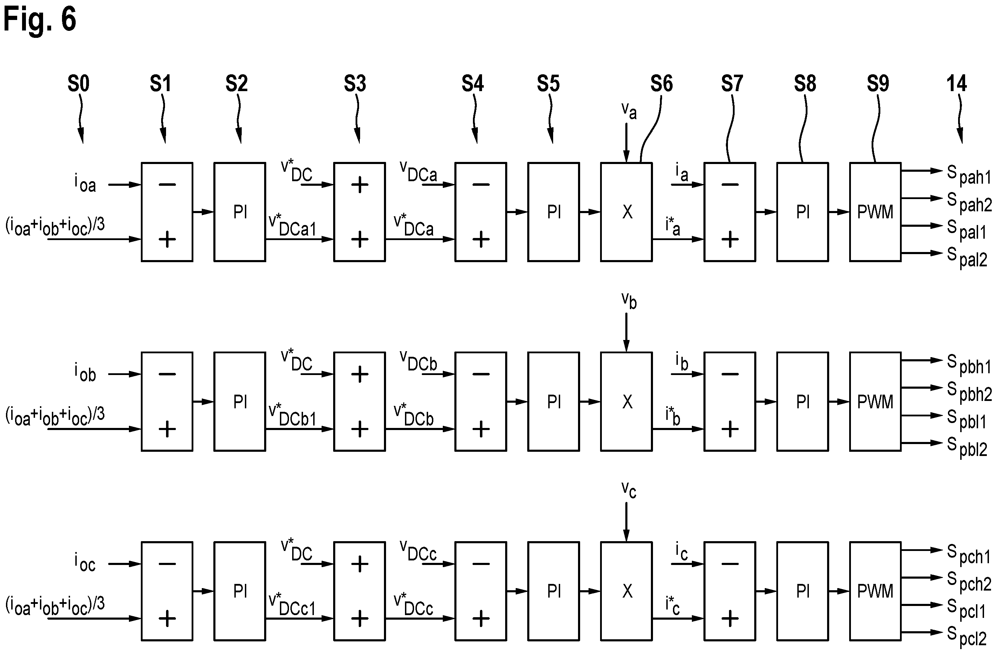

In the present embodiment, all switches 14 of the converter 1 are preferably GaN based switches. In this regard, it is noted that in the figures, individual switches furthermore comprise an enumeration such as "Spah1", which will be referred to in light of control methods discussed below in view of Figs. 6 to 8.

As can be taken from Fig. 2, each switch leg 13a, 13b of the present embodiment is connected to one phase 8a, 8b, 8c and to neutral 9, respectively for each rail 7a, 7b, 7c. Herein, if for example a phase 8a, 8b, 8c of the AC grid of a rail 7a, 7b, 7c of the converter 1 experiences a fault, the remaining rails (for example, rails 7a and 7b) can further operate in two-phase mode. Thereby, the converter 1 remains substantially independent from faults and can operate even when an error occurs.

The converter 1 as mentioned above comprises the input stage 5b of the DC/DC converter circuit 20, the latter being explained in more detail below. Herein, each rail 7a, 7b, 7c of the primary side circuit 5 comprises respectively one input stage 5b. Each input stage 5b comprises two switch legs 15a and 15b in parallel, each switch leg 15a, 15b comprising two switches 14 in series with one another. Further, one transformer 2a, 2b, 2c of the transformer device 2 is connected between these switch legs 15a, 15b, i.e. a primary winding thereof is connected between the two switch legs 15a, 15b, for each rail 7a, 7b, 7c.

Between the PFC-AC/DC converter circuits 5a and the input stages 5b of the DC/DC converter circuit 20, each primary side circuit 5 of each rail 7a, 7b, 7c comprises at least one smoothing capacitor 21 connected in parallel therebetween.

The converter 1 also comprises the bidirectional secondary side circuit 6, which comprises an output stage 6a for the DC/DC converter circuit 20 connected to the secondary side 4 of the transformer device 2. The output stage 6a is preferably connected to a battery and supplies output voltage "Vout" thereto.

In the sense herein, the DC/DC converter circuit 20 comprises the input stage 5b, the transformer device 2, and the output stage 6a. Herein, the PFC-AC/DC converter circuit 5a converts the AC power from the grid to a DC current, the input stage 5b converts the DC current to an AC current to be supplied to the transformer device 2, and the output stage 6a rectifies the AC current output from the transformer device 2 to a DC current, thus in sum resulting in AC/DC conversion.

In the present embodiment, as can be taken from Fig. 2, the output stage 6a is a multi-level and multi-rail DC/DC converter output stage 6a. Herein, the output stage 6a is a three-level output stage, in which the levels are interconnected in bridge configuration, and each of the rails 6a1, 6a2, and 6a3 comprises two stacked half-bridges 10a, 10b, each with a voltage of Vco1 or Vco2, respectively. Furthermore, the output stage 6a of the present embodiment comprises an LLC configuration, as does the input stage 5b.

Herein, each rail 6a1, 6a2, 6a3 of the output stage 6a has independently controllable voltages Vco1, Vco2 and currents ioa, iob, and ioc. Furthermore, the rails 6a1, 6a2, 6a3 are connected in parallel to one another. In sum, the output stage 6a is referred to as comprising all rails 6a1, 6a2, 6a3, each of the rails 6a1, 6a2, 6a3 comprising two stacked half-bridges 10a, 10b.

Thus, the present embodiment provides the converter 1 with two-level three-rail primary side circuit with the multi-phase multi-level and multi-rail DC/DC converter circuit 20, i.e. the input stage 5b, the transformer device 2, and the output stage 6a.

In particular, the DC/DC converter circuit 20 of the present embodiment forms three isolated DC/DC converters, comprising per DC/DC converter, one input stage 5b of one rail 7a, one transformer 2a, 2b, 2c, and one output stage rail 6a1, 6a2, 6a3 of the secondary side circuit 6. Thereby, assembly and control thereof is simplified and cost reduced.

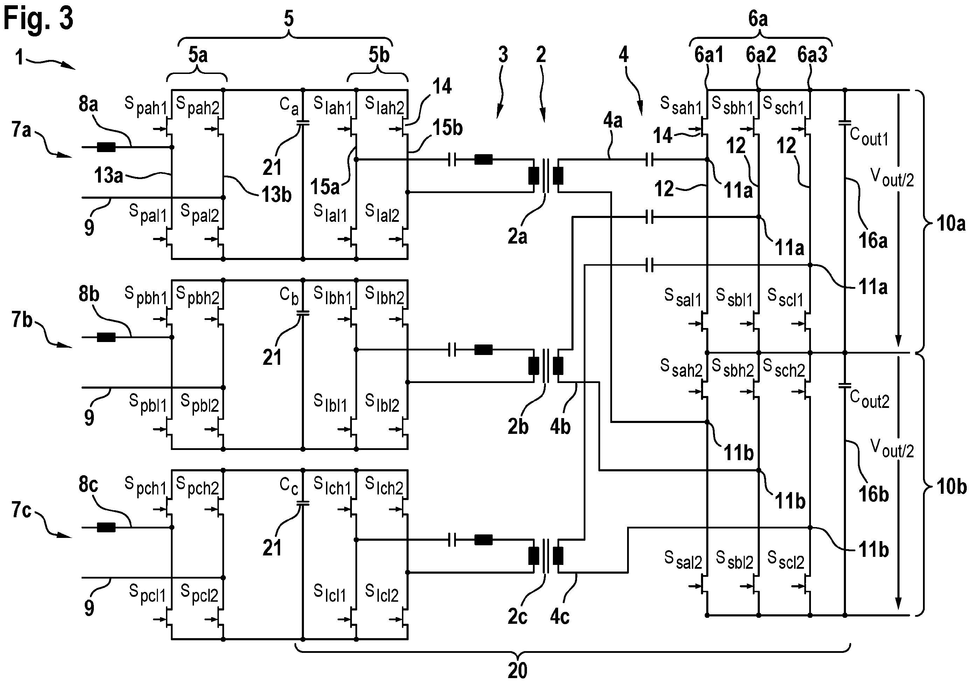

Fig. 3 shows a circuit diagram of a multi-phase AC/DC converter 1 according to a third embodiment of the present invention.

The multi-level output stage 6a of the present embodiment is an SRC (series resonant capacitor) output stage 6a, wherein each rail 6a1, 6a2, 6a3 comprises two stacked half-bridges 10a and 10b, each outputting half the total output voltage Vout/2. Herein, the input stage 5b comprises an LLC configuration. Apart from different components, especially regarding the SRC components, the shown circuit diagram of Fig. 3 is substantially an equivalence or alternative circuit representation to that of Fig. 2.

Thereby, as also with the embodiment of Fig. 2, the present embodiment comprises in total six half-bridges 10a, 10b, namely two for each of the three rails 6a1, 6a2, 6a3. In view of this circuit representation, each rail 6a1, 6a2, 6a3 will also in some cases be referred to as a "rectifier leg" 12.

In this DC/DC converter circuit 20, the secondary side 4 of the transformer device 2 is connected in series between a first connection point 11a to a first secondary half-bridge 10a and a second connection point 11b to a second secondary half-bridge 10b different from the first secondary half-bridge 10a.

Each phase 4a, 4b, 4c of the secondary side 4 of the transformer device 2 is connected between the first and second connection points 11a, 11b to the first secondary half-bridge 10a and to the second secondary half-bridge 10b of a single secondary rectifier leg 12 or rail 6a1, 6a2, 6a3 of the DC/DC converter circuit output stage 6a. Herein, the single secondary rectifier leg 12 spans both the first secondary and the second secondary half-bridges 10a, 10b. In other words, the present embodiment includes three secondary rectifier legs 12.

Each of the secondary half-bridges 10a, 10b respectively comprises a first or second capacitor 16a, 16b connected thereto, in parallel to the secondary rectifier legs 12.

Via this exemplary configuration, efficient power conversion and voltage regulation are achieved by the converter 1.

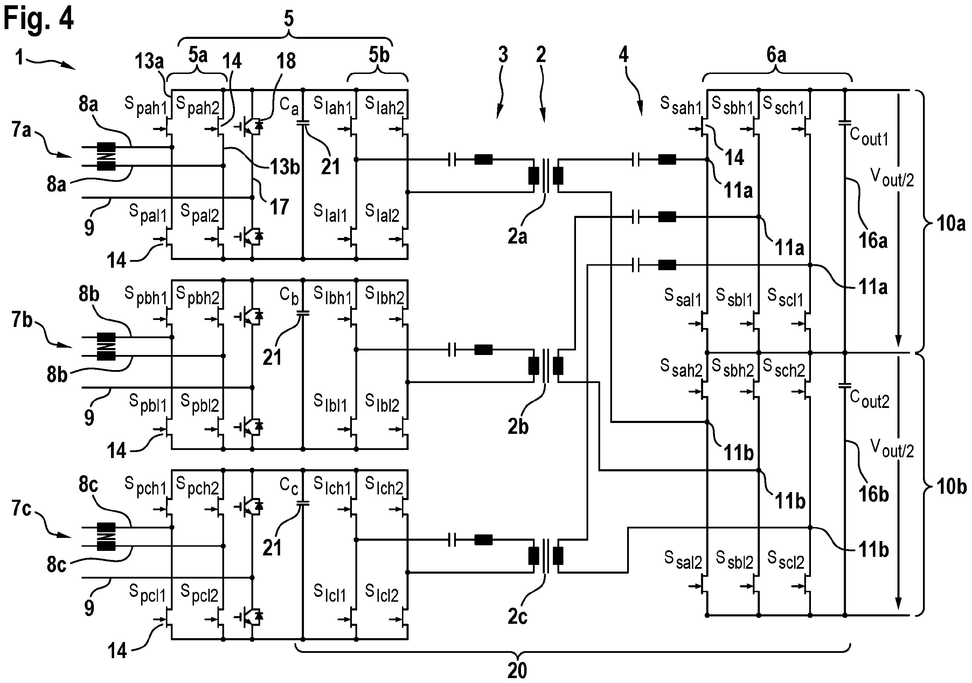

Fig. 4 shows a circuit diagram of a multi-phase AC/DC converter 1 according to a fourth embodiment of the present invention.

In the present embodiment, each PFC-AC/DC converter circuit 5a comprises the two switch legs 13a, 13b as above, wherein these are connected to the phase 8a, 8b, 8c in an interleaved manner. Herein, both switch legs 13a, 13b are connected to the respective phase, for example to the phase 8a with regard to the first rail 7a.

Furthermore, the PFC-AC/DC converter circuit 5a of each rail 7a, 7b, 7c comprises an additional rectifier switch leg 17 with two switches 18 in series and connected to neutral 9.

Preferably, as shown in Fig. 4, the switches 14 of the two switch legs 13a, 13b and the switches 18 of the additional rectifier switch leg 17 are of different types which allows for a combination of fast and slow switches. For example, the switch legs 13a, 13b of the PFC-AC/DC converter circuit 5a can comprise fast switches 14, for example MOSFETs, and the additional rectifier switch leg 17 can comprise slower switches 18, for example IGBTs. This intercombination of switches 14, 18 allows for reduction in costs and higher efficiency.

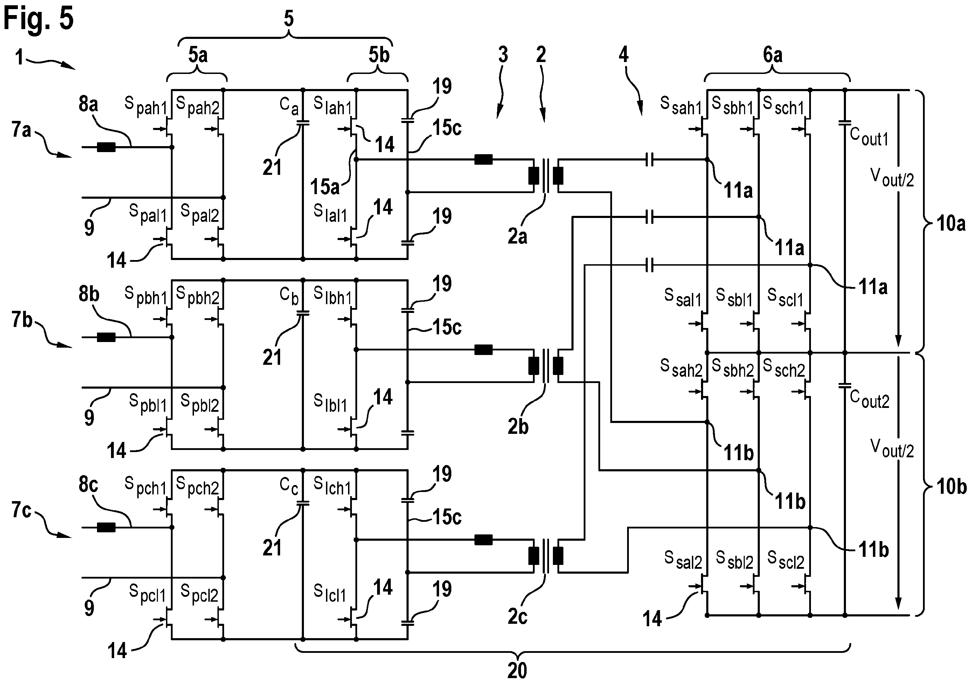

Fig. 5 shows a circuit diagram of a multi-phase AC/DC converter 1 according to a fifth embodiment of the present invention.

Herein, each input stage 5b with respect to each rail 7a, 7b, 7c comprises a half-bridge LLC configuration with one switch leg 15a and one capacitor leg 15c connected in parallel, wherein the capacitor legs 15c respectively comprises two capacitors 19 in series with one another.

Via this configuration, the converter 1 of the present embodiment is suited for lower power applications, and reduces the total number of switches 14, thus reducing the costs and operating effort thereof.

Now, with respect to Fig. 6, a control method for operating the converter 1 according to the foregoing embodiments, especially in view of Fig. 2, will be described. Therein, Fig. 6 shows a flow block diagram illustrating a control method for operating the multi-phase AC/DC converter 1 according to an embodiment of the present invention.

The flow block diagram of Fig. 6 will be described in terms of steps S0 - S9. As can be seen from Fig. 6, the flow block diagram is shown in three control flows, wherein each of these represents one rail 6a1, 6a2, 6a3 of the output stage 6a of the converter 1, as shown via each of the output currents ioa, iob, ioc. In the following, one first control flow will be described, and it is to be understood that the following explanation applies to all three control flows.

Initially, at an initialization step S0, output current ioa of that rail is determined. Further, an average output current (ioa + iob + ioc) / 3 of all rails is calculated (corresponding to phases a, b, and c).

In a first step S1, the output current ioa of that rail is compared to the average output current (ioa + iob + ioc) 13.

In a second step S2, this difference between these values is fed into a Proportional-Integral PI controller, which generates a DC-link voltage correction signal V*DCa1.

In a third step S3, this DC-link voltage correction signal V*DCa1 is then added to a DC-link voltage reference value V*DC, resulting in a required DC-link voltage value V*DCa.

In a fourth step S4, a DC-link voltage difference between an actual DC-link voltage value VDCa and the DC-link voltage required value V*DCa is determined.

Then, as will be explained with reference to steps S5 - S9, a PWM signal for switches 14 of the PFC-AC/DC converter circuit 5a based at least on the DC-link voltage difference output after the fourth step S4 is determined and to the switches 14.

Therein, in a fifth step S5, via a PI controller, a root mean square (RMS) value of a reference input current from the DC-link voltage difference of step S4 is calculated. Herein, the RMS value of the reference input current is a calculated RMS of the DC-link voltage difference (RMS value of current) processed through a PI controller, i.e. a calculated RMS of the difference between the actual DC-link voltage value VDCa and the DC-link voltage required value V*DCa.

In a sixth step S6, the method comprises multiplying the RMS value of reference input current from step S5 with a sensed unity input voltage va at the PFC-AC/DC converter circuit 5a to calculate an input current reference value i*a. The sensed unity input voltage va of the PFC-AC/DC converter circuit 5a is a normalized sensed input voltage with maximum peak value thereby being 1. To calculate the unity input voltage va, the voltage is preferably sensed and divided by its RMS value or peak value.

In a seventh step S7, the method comprises calculating a difference between the input current reference value i*a and a sensed input current value ia (actual current value) of the phase 8a.

In an eighth step S8, the method comprises calculating, via proportional-integral control, a sinusoidal signal value based on said difference between the input current reference value i*a and the sensed input current value ia.

In a ninth step, the PWM signal is calculated based on the sinusoidal signal value from step S8. The calculated PWM signal is then output to the switches 14. In this case, as a comparison with the nomenclature in Fig. 2 demonstrates, the PWM signal is output to the switches 14 of the PFC-AC/DC converter circuit 5a.

Via this control scheme, stable DC link voltages VDCa, VDCb, and VDCc are achieved while maintaining sinusoidal AC currents ia, ib, ic. In particular, the method compares current of each rail 7a, 7b, 7c to the average value of the output current and adjusts the DC-link voltages VDCa, VDCb, VDCc to maintain current balance.

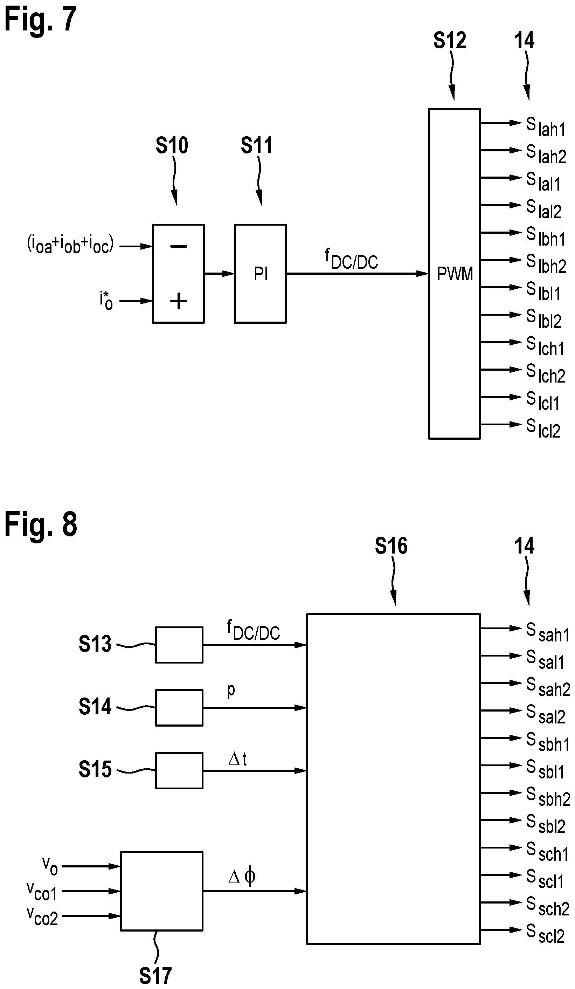

Now, in view of Fig. 7, a control method for operating the input stage 5b will be explained, wherein Fig. 7 shows another flow block diagram illustrating a control method for operating the multi-phase AC/DC converter 1 according to an embodiment of the present invention. In particular, the control method of the present embodiment is preferably combinable with the foregoing described control method, i.e. steps S0 - S9, or can be carried out independent therefrom.

Herein, in a tenth step S10, an output current difference value is calculated as a difference between a sum of the output currents of all rails ioa + iob + ioc and a reference, especially a target, total output current i*o of the DC/DC converter circuit 20. Herein, the reference or target total output current i*o of the DC/DC converter circuit 20 is the reference or target total output current of the entire multi-phase AC/DC converter 1. In other words, in step S10, the actual total output current is compared with the reference or target output current.

Based on this output current difference, in an eleventh step S11, a switching frequency fdc/dc for all switches 14 of the input stage 5b is calculated using a PI controller.

Based on this calculated switching frequency fdc/dc of step S11, in a twelfth step S12, PWM signals are calculated for all switches 14 of the input stage 5b, and output thereto.

Preferably, the calculated switching frequency fdc/dc of step S11 is equal for all switches 14 of the input stage 5b. In other words, all switches 14 of the input stage 5b are operated with the same switching frequency fdc/dc.

This further allows reduction in size of the converter 1, as well as providing a cancellation effect of the multiple phases of magnetic flux in the transformer device 2, thereby also allowing for a reduction in output filter capacitor sizes. Furthermore, due to the same frequency switching, the output current does not have a beat frequency between the multiple rails of the output stage 6a.

Now, in view of Fig. 8, a control method for operating switches 14 of the output stage 6a will be explained, wherein Fig. 8 shows another flow block diagram illustrating a control method for operating the multi-phase AC/DC converter 1 according to an embodiment of the present invention. In particular, the control method of Fig. 8 is combinable with the foregoing control methods, or can be carried out independent therefrom.

In a thirteenth step S13, the method of the present embodiment comprises determining an operating frequency fdc/dc of switches 14 of the input stage 5b based on a required output current and voltage of the converter 1. Preferably, the value from step S11 is used herein.

Further, the method comprises in a fourteenth step S14, calculating electrical output power P output from sensed output voltage Vo and/or required or sensed output current ioa, iob, and ioc.

In a fifteenth step S15, a time delay Δt between switching signals of switches 14 of the output stage 6a with respect to the switching signals of the switches 14 of the input stage 5b is calculated based on said operating frequency fdc/dc and said output power P.

Then, in a sixteenth step S16, a duration of the switching signal of the switches 14 of the output stage 6a is determined based on said operating frequency fdc/dc and said output power P.

By determining the time delay Δt between the switching signals of the switches 14 of the input stage 5b with respect to those of the output stage 6a and by determining the duration of the switching signals of the input stage 5b, a synchronous rectification pulse for switches 14 of the output stage 6a is generated. This generated synchronous rectification pulse is then output to the switches 14 of the output stage 6a.

Preferably, a total time delay comprises said aforementioned determined time delay Δt as well as a predetermined or pre-known dead-time of the respective switches 14. This dead-time value is preferably added to the determined time delay Δt and prevents short-circuiting.

Herein, the time delay Δt and duration of the switching signals of the output stage 6a are determined based on the output power P only as a threshold value. Below the output power threshold value, synchronous rectification is not carried out. Above the output power threshold value, the synchronous rectification as above is carried out, i.e. the time delay Δt and the duration of the switching signals of the output stage 6a are determined as elucidated above. Herein, beyond the use as a threshold value, the output power P is not used as a basis for determining the time delay Δt and/or the duration of the switching signals when generating the synchronous rectification pulse.

Furthermore, the step S16 of determining the duration of the switching signal of the switches 14 of the output stage 6a is based only on said operating frequency fdc/dc and said output power P, wherein the output power P output is calculated from the sensed output voltage Vo and/or required/target output current. Therefore, the synchronous rectification pulse is determined without employing any current-sensing.

Thereby, the present control method is carried out without current-sensing, especially without current-sensing at the output stage 6a, by generating the switching signals for the output stage 6a based only on the switching signals of the input stage 5b on the primary side 3 of the converter 1. Therein, the duty cycle of the output stage switching signals is varied based on frequency of operation fdc/dc and output power P of the input stage 5b on the primary side 3.

Especially with respect to the converter 1 of Fig. 2, the control method additionally comprises a seventeenth step S17, in which phase-shifting Δφ switches 14 of a first half-bridge 10a of the multi-level output stage 6a with respect to switches 14 of a second half-bridge 10b of the multi-level output stage 6a is carried out for balancing voltages Vco1, Vco2 between first and second capacitors 16a, 16b connected at the output stage 6a of the multi-level converter 1. In combination with for example Fig. 3, this control method is carried out for balancing the voltages between first and second capacitors 16a, 16b for all three half-bridges 10a or 10b.

Thereby, balancing between different levels of the multi-level output stage 6a of the DC/DC converter circuit 20 is achieved.

In summary, the converters 1 and control methods discussed above provide multi-phase AC/DC converters 1 which have a reduced size, higher electrical and thermal efficiency and can be produced for low costs , and control methods for multi-phase converters and control methods for said multi-phase AC/DC converter 1 which allow for simple and flexible as well as efficient control of the multi-phase converters, and which allow for reduction in the size of transformers 2a, 2b, 2c and output filter capacitor 16a, 16b sizes thereof.

In addition to the foregoing written explanations, it is explicitly referred to figures 1 to 8, wherein the figures in detail show circuit diagrams and control methods of the invention.

### List of Reference Numerals

- 1: multi-level converter
- 2: transformer device
- 2a-c: transformers
- 3: primary side
- 4: secondary side
- 4a-c: secondary phase
- 5: primary side circuit
- 5a: AC/DC converter circuit
- 5b: input stage
- 6: secondary side circuit
- 6a: output stage
- 6a1-6a3: output stage rail
- 7a-c: rail
- 8a-c: primary phase
- 9: neutral
- 10a: first secondary half-bridge
- 10b: second secondary half-bridge
- 11a: first connection point
- 11b: second connection point
- 12: secondary rectifier leg
- 13a, 13b: switch leg of AC/DC converter circuit
- 14: switches
- 15a, 15b: switch leg of input stage
- 15c: capacitor leg
- 16a: first capacitor
- 16b: second capacitor
- 17: additional rectifier switch leg
- 18: switches

- 19: capacitor
- 20: DC/DC converter circuit
- 21: smoothing capacitor

## Claims

1. Multi-phase AC/DC converter (1) comprising:
• a transformer device (2) with a primary side (3) and a secondary side (4);
• a bidirectional primary side circuit (5) connected to the primary side (3) of the transformer device (2);
• a bidirectional secondary side circuit (6) connected to the secondary side (4) of the transformer device (2); and
• a DC/DC converter circuit (20) comprising at least one input stage (5a), the transformer device (2), and an output stage (6a); wherein
• the bidirectional primary side circuit (5) comprises an AC/DC converter circuit (5a) and the at least one input stage (5b) of the DC/DC converter circuit (20);
• the bidirectional secondary side circuit (6) comprises the output stage (6a) of the DC/DC converter circuit (20); and
• the primary side circuit (5) is multi-rail with a number of rails (7, 7a, 7b, 7c) corresponding to a number of phases of the multi-phase AC/DC converter (1), and each rail (7, 7a, 7b, 7c) being connected between a phase (8a, 8b, 8c) and neutral (9) or between a first phase (8a) and another phase (8b, 8c) of a multi-phase AC input source (8).

2. Multi-phase AC/DC converter (1) according to claim 1, wherein the output stage (6a) of the DC/DC converter circuit (20) is a multi-level DC/DC converter output stage (6a), especially a multi-level and multi-rail DC/DC converter output stage (6a).

3. Multi-phase AC/DC converter (1) according to claim 2, wherein the secondary side circuit (6) comprises a plurality of stacked half-bridges (10a, 10b) connected in series with one another.

4. Multi-phase AC/DC converter (1) according to claim 3, wherein in the output stage (6a) of the DC/DC converter circuit (20), the secondary side (4) of the transformer device (2) is connected, especially in series, between a first connection point (11a) to a first secondary half-bridge (10a) and a second connection point (11b) to a second secondary half-bridge (10b) different from the first secondary half-bridge (10a), and wherein especially each phase (4a, 4b, 4c) of the secondary side (4) of the transformer device (2) is connected between said first and second connection points (11a, 11b) to the first secondary half-bridge (10a) and to the second secondary half-bridge (10b) of a single secondary rectifier leg (12) of the output stage (6a).

5. Multi-phase AC/DC converter (1) according to any one of the foregoing claims, wherein each rail (7a, 7b, 7c) of the primary side circuit (5) comprises one AC/DC converter circuit (5a).

6. Multi-phase AC/DC converter (1) according to claim 5, wherein each AC/DC converter circuit (5a) is a front-end power factor correction AC/DC converter circuit (5a), PFC-AC/DC converter circuit (5a).

7. Multi-phase AC/DC converter (1) according to claim 6, wherein each PFC-AC/DC converter circuit (5a) of the primary side circuit (5) comprises two switch legs (13a, 13b) in parallel, each switch leg (13a, 13b) comprising two switches (14) in series, wherein one switch leg (13a) is connected to the phase (8a, 8b, 8c) and the other switch leg (13b) is connected to neutral (9) or to another phase (8a, 8b, 8c).

8. Multi-phase AC/DC converter (1) according to claim 6, wherein each PFC-AC/DC converter circuit (5a) of the primary side circuit (5) comprises two switch legs (13a, 13b) in parallel, each switch leg (13a, 13b) comprising two switches (14) in series, wherein both switch legs (13a, 13b) are connected to the phase (8a, 8b, 8c) in an interleaved manner.

9. Multi-phase AC/DC converter (1) according to any one of the foregoing claims, wherein each rail (7a, 7b, 7c) of the primary side circuit (5) comprises one input stage (5b) of the DC/DC converter circuit (20), and wherein especially each input stage (5b) of the DC/DC converter circuit (20) is connected in parallel to the AC/DC converter circuit (5a) for each rail (7a, 7b, 7c).

10. Control method for operating a multi-phase converter (1), said converter (1) comprising a primary side circuit (5), a transformer device (2), a secondary side circuit (6) and a DC/DC converter circuit (20) comprising an input stage (5b), the transformer device (2), and an output stage (6a), wherein the primary side circuit (5) comprises an AC/DC converter circuit (5a) and the input stage (5b) of the DC/DC converter circuit (20) and the secondary side circuit (6) comprises the output stage (6a) of the DC/DC converter circuit (20), the control method comprising:
• determining (S13) an operating frequency (fdc/dc) of switches (14) of the input stage (5b) based on a required output current and voltage of the converter (1);
• calculating (S14) output power from sensed output voltage and/or required or sensed output current;
• determining (S15) a time delay between switching signals of switches (14) of the output stage (6a) with respect to the switching signals of the switches (14) of the input stage (5b) based on said operating frequency and said output power;
• determining (S16) a duration of the switching signals of the switches (14) of the output stage (6a) based on said operating frequency and said output power.

11. Control method according to claim 10, the output stage (6a) of the DC/DC converter circuit (20) being a multi-level output stage (6a) of the DC/DC converter circuit, the control method further comprising:
• phase-shifting (S17) switches (14) of a first half bridge (10a) of the multi-level output stage (6a) with respect to switches (14) of a second half-bridge (10b) of the multi-level output stage (6a) for balancing voltages between first and second capacitors (16a, 16b) connected to the output stage (6a) of the DC/DC converter circuit.

12. Control method for operating the multi-phase AC/DC converter (1) according to any one of the foregoing claims with the output stage (6a) as the multi-level output stage (6a) of claim 2 and being multi-rail, and with the primary side circuit (5) comprising, in each rail (7a, 7b, 7c), the PFC-AC/DC converter circuit (5a) of claim 6, the method comprising:
• for each rail (6a1, 6a2, 6a3) of the multi-level output stage (6a), determining (S0) an output current (ioa, iob, ioc);
• calculating (S0) an average of said output currents (ioa + iob + ioc / 3) of all rails (6a1, 6a2, 6a3) ;
• calculating (S1), per rail (6a1, 6a2, 6a3), a DC-link voltage correction value (V*DCa1) based on a difference between the output current (ioa, iob, ioc) of that rail (6a1, 6a2, 6a3) and the average output current (ioa + iob + ioc / 3) of all rails (6a1, 6a2, 6a3), especially via proportional-integral control (S2);
• adding (S3) the DC-link voltage correction value (VDCa1) to a DC-link voltage reference value (VDC) to determine a DC-link voltage required value (V*DCa);
• determining (S4) a DC-link voltage difference between an actual DC-link voltage value (VDCa) and the DC-link voltage required value (V*DCa); and
• determining (S5 - S9) a PWM signal for switches (14) of the PFC-AC/DC converter circuit (5a) based at least on the DC-link voltage difference and outputting the PWM signal to the switches (14).

13. Control method according to claim 12, wherein during the step (S5 - S9) of determining the PWM signal, the method further comprises:
• calculating (S5), especially via proportional-integral control, a root mean square, RMS, value of reference input current from the DC-link voltage difference;
• multiplying (S6) the RMS value of reference input current with a sensed unity input voltage (va) at the PFC-AC/DC converter circuit (5a) to calculate an input current reference value (ia*);
• calculating (S7) a difference between the input current reference value (ia*) and a sensed input current value (ia);
• calculating (S8), especially via proportional-integral control, a sinusoidal signal value based on said difference between the input current reference value (ia*) and the sensed input current value (ia); and
• calculating (S9) a PWM signal based on the sinusoidal signal value.

14. Control method according to claim 12 or claim 13, further comprising:
• calculating (S10) an output current difference value as a difference between a sum of the output currents (ioa + iob + ioc) of all rails (6a1, 6a2, 6a3)and a reference, especially a target, total output current of the DC/DC converter circuit (20); and
• calculating (S11), especially via proportional-integral control, a switching frequency (fdc/dc) for all switches (14) of the input stage (5b) based on the output current difference value.

15. Control method according to claim 14, wherein the switching frequency (fdc/dc) is substantially equal for all switches (14) of the DC/DC input stage (5b).
